(19) Europäisches Patentamt
European Patent Office
Office européen des brevets

(11) **EP 1 648 174 B1**

(12) **EUROPÄISCHE PATENTSCHRIFT**

(45) Veröffentlichungstag und Bekanntmachung des Hinweises auf die Patenterteilung:
**22.08.2012 Patentblatt 2012/34**

(51) Int Cl.:
*H04N 7/30* ^(2006.01)   *H04N 7/26* ^(2006.01)

(21) Anmeldenummer: **05023071.3**

(22) Anmeldetag: **23.06.1997**

(54) **Verfahren und Anordnung zur Reduktion von Codierungsartefakten von blockbasierten Bildcodierungsverfahren und objektbasierten Bildcodierungsverfahren**

Method and device for reducing blocking artifacts in encoded images

Méthode et appareil pour réduire les artefacts de blocs dans des images codées

(84) Benannte Vertragsstaaten:
**DE FR GB IT**

(30) Priorität: **04.07.1996 DE 19626985**

(43) Veröffentlichungstag der Anmeldung:
**19.04.2006 Patentblatt 2006/16**

(62) Dokumentnummer(n) der früheren Anmeldung(en) nach Art. 76 EPÜ:
**97110218.1 / 0 817 496**

(73) Patentinhaber: **SIEMENS AKTIENGESELLSCHAFT 80333 München (DE)**

(72) Erfinder: **Kaup, André Prof. Dr. 91090 Effeltrich (DE)**

(56) Entgegenhaltungen:
**EP-A- 0 502 622    EP-A- 0 626 790
US-A- 5 229 864    US-A- 5 337 088
US-A- 5 526 135**

- **MEIER T ET AL: "A REGION-BASED ALGORITHM FOR ENHANCEMENT OF IMAGES DEGRADED BY BLOCKING EFFECTS" IEEETENCON - DIGITAL SIGNAL PROCESSING APPLICATIONS, US,NEW YORK, NY: IEEE, 26. November 1996 (1996-11-26), Seite 405-408, XP000781712 ISBN: 0-7803-3680-1**

**Beschreibung**

Bei Bildcodierungsverfahren, die entweder auf dem Prinzip der blockbasierten Transformationscodierung oder auch auf dem Prinzip der objektbasierten Transformationscodierung basieren, wird ein digitalisiertes Bild in Blöcke bzw. Objekte unterteilt und jeder Block, bzw. jedes Objekt wird anschließend unabhängig von seinen Nachbarblöcken codiert. Durch die unabhängige Codierung der Bildblöcke bzw. der Bildobjekte entstehen v. a. bei hohen Kompressionsfaktoren störende Codierfehler, die im Folgenden als Codierungsartefakte bezeichnet werden. Ein Beispiel für solche Codierungsartefakte ist in den künstlichen Kanten an Blockrändern, den sog. Blockartefakten oder auch in ringartigen Mustern an Grauwertsprüngen, dem sog. Ringing im codierten Bild, zu sehen. Für einen Betrachter eines Bildes, welches mit einem Bildcodierungsverfahren codiert bzw. decodiert wurde, das auf einem der oben beschriebenen Prinzipien beruht, führen diese Codierfehler zu einer mit zunehmender Kompression der Bilddaten sich deutlich verschlechternden subjektiven Qualität des decodierten Bildes.

Verschiedene Verfahren, die auf dem Prinzip der blockbasierten Transformationscodierung beruhen, sind bekannt. Eine Auswahl der blockbasierten Bildcodierungsverfahren sind beispielsweise folgende Bildcodierungsverfahren:

- JPEG, welches in dem Dokument [1] beschrieben ist,
- MPEG 1, MPEG 2, welche in dem Dokument [2] beschrieben sind, oder
- H.263, welches im Dokument [3] beschrieben ist.

Ein objektbasiertes Bildcodierungsverfahren ist beispielsweise aus dem Dokument [4] bekannt.

Aus dem Dokument [5] ist ein Verfahren bekannt, bei dem im Rahmen eines objektbasierten Bildcodierungsverfahrens ein blockbasiertes Bildcodierungsverfahren eingesetzt wird.

Zur Reduktion der auftretenden Codierfehler unter der Randbedingung der Kompatibilität bekannter Bildcodierungsverfahren gibt es bisher zwei prinzipielle Ansätze:

- Aus dem Dokument [6] ist eine Anordnung sowie ein Verfahren bekannt, mit dem ein decodiertes Bild durch eine nachgeschaltete Tiefpassfilterung geglättet wird, wobei das eingesetzte Tiefpassfilter als globales oder auch als lokal adaptives Filter ausgestaltet werden kann.
Ein erheblicher Nachteil in diesem Verfahren ist darin zu sehen, dass nicht nur künstliche Grauwertsprünge an Blockrändern beseitigt werden, sondern auch hochfrequente Details innerhalb des Bildes unerwünschterweise geglättet werden und somit für den Betrachter nur noch in schlechter Qualität bzw. gar nicht mehr erkennbar sind.
Um diese unerwünschte Glättung wichtiger Details zu vermeiden, kann die Tiefpassfilterung auf die Blockränder bei dem- schränkt werden.
Ein solches Verfahren ist in dem Dokument [7] beschrieben. Dieses Verfahren weist jedoch den Nachteil auf, dass die sog. Ringing-Effekte, die sich typischerweise über den ganzen Bildblock verteilen, nicht behoben werden können;

- Ferner ist es aus den Dokumenten [6], [8] und [9] bekannt, eine Bildverbesserung auf der Basis von Vorwissen über das codierte Bild durchzuführen. Bei diesem Verfahren wird der Decodierprozess nicht als einfache Invertierung der senderseitigen Codierung aufgefasst, sondern als Optimierungsproblem formuliert. Dabei wird von der Empfängereinheit das jenige Bild bestimmt, das einerseits mit den empfangenen, quantisierten Bilddaten konform ist, andererseits aber auch bestimmte Randbedingungen typischer Bilddaten erfüllt, wie z. B. Glattheit.
Diese Vorgehensweise weist jedoch v. a. den Nachteil auf, dass diese Verfahren eine sehr hohe Komplexität aufweisen, da die Randbedingungen sowohl im Zeitbereich als auch im Frequenzbereich formuliert werden und somit bei der Bildverbesserung ein ständiger Wechsel zwischen den beiden Bereichen erforderlich ist. Somit ist eine Echtzeitrealisierung dieser Verfahren in der Videokommunikation nicht möglich.

Ferner ist es aus dem Dokument [10] bekannt, eine Bildverbesserung auf eine Weise durchzuführen, dass für einen Bildpunkt eines Bildes ein neuer Helligkeitswert oder Farbwert ermittelt wird und dem Bildpunkt zugeordnet wird, wobei sich der neue Helligkeits- und/oder Farbwert aus einer Ermittlung des alten, decodierten Helligkeitswert bzw. Farbwerts des Bildpunktes und direkt benachbarter Bildpunkte ermittelt wird.

Dieses Verfahren weist vor allem den Nachteil auf, dass, unabhängig von der Semantik des Bildes, beispielsweise unabhängig von der Größe des Unterschiedes der Helligkeitswerte benachbarter Bildpunkte oder auch unabhängig davon, ob sich zwei Bildpunkte in unterschiedlichen Bildblöcken oder unterschiedlichen Objekten befinden, alle benachbarten Bildpunkte bei der Mittelung der Helligkeitswerte bzw. Farbwerte berücksichtigt werden. Dies führt zu einer nur geringen Bildverbesserung bei der Decodierung eines digitalisierten Bildes.

Ferner zeigt US-A-5 337 088 (HONJO MASAHIRO) eine Randpixelkorrektur in Abhängigkeit der Größe von Pixeldifferenzen zwischen Blöcken, und US-A-5 229 864 (MORONAGA KENJI ET AL) eine Selektion zwischen Interblock- und Rand-Filter in Abhängigkeit der Größe der codierten Datenmenge.

Somit liegt der Erfindung das Problem zugrunde, ein einfaches, lokal adaptives Verfahren anzugeben, mit dem unerwünschte Codierungsartefakte eliminiert werden, ohne dass in einem Bild vorhandene hochfrequente Detailstruktur zerstört wird. Ferner liegt der Erfindung das Problem zugrunde, eine Bildcodiereinheit, sowie eine Bilddecodiereinheit anzugeben, in der das Verfahren zur Bildverbesserung durchgeführt wird.

Die Probleme werden durch die Verfahren gemäß Patentanspruch 1, sowie durch die Bildcodiereinheit gemäß Patentanspruch 11 und die Bilddecodiereinheit gemäß Patentanspruch 13 gelöst.

Bei einem Verfahren zur Reduktion von Codierungsartefakten an blockbasierten Bildcodierungsverfahren wird für mindestens einen Teil der Bildpunkte des Bildes für dessen Nachbarbildpunkte überprüft, ob ein Unterschied in den Helligkeitswerten bzw. Farbwerten jeweils eines Nachbarbildpunktes zu dem Bildpunkt besteht, der kleiner ist als eine vorgebbare Schranke. Ist dies der Fall, so bedeutet dies, dass in diesem Bildbereich mit größerer Wahrscheinlichkeit keine Detailstruktur enthalten ist, und der jeweilige Nachbarbildpunkt wird bei einer Ermittlung eines neuen Helligkeitswerts bzw. neuen Farbwerts für den jeweiligen Bildpunkt mit berücksichtigt. Ist der Unterschied jedoch größer als die vorgebbare Schranke, so wird der entsprechende Nachbarbildpunkt bei der Ermittlung des neuen Helligkeitswerts bzw. Farbwerts des Bildpunktes nicht berücksichtigt. Es wird für den entsprechenden Bildpunkt ein neuer Helligkeits- bzw. Farbwert bei diesem Verfahren ermittelt, indem aus Helligkeitswerten bzw. Farbwerten berücksichtigter Nachbarbildpunkte ein neuer Helligkeitswert bzw. Farbwert für den Bildpunkt ermittelt wird. Dabei wird ein Nachbarbildpunkt entweder berücksichtigt, wenn der Unterschied der Helligkeitswerte bzw. Farbwerte kleiner ist als die vorgebbare Schranke, oder wenn der Bildpunkt und der entsprechende Nachbarbildpunkt sich in unterschiedlichen Bildblöcken des Bildes befinden. In diesem Fall würde ein Blockartefakt entstehen, der durch entsprechende Berücksichtigung bei der Ermittlung des neuen Helligkeitswerts bzw. Farbwerts vermindert wird. Die Berücksichtigung der Nachbarbildpunkte bei der Ermittlung des neuen Helligkeitswerts bzw. Farbwerts zu dem Bildpunkt ist anschaulich vergleichbar mit einer Glättung bzw. Tiefpassfilterung der Helligkeitswerte bzw. Farbwerte des Bildpunkte mit der Umgebung des Bildpunktes.

Bei diesem Verfahren wird getrennt für jeden Bildpunkt und damit für eine beliebige Anzahl von Richtungen innerhalb des Bildes berücksichtigt, ob in der jeweiligen Richtung zu dem Bildpunkt eine Glättung erfolgen sollte oder nicht. Somit ist eine Bildverbesserung wesentlich höherer Granularität unter Berücksichtigung der Semantik des Bildinhalts, die durch die Unterschiede der Helligkeitswerte bzw. Farbwerte der Bildpunkte gegeben ist, möglich. Dies führt zu einer einfachen, lokal adaptiven, schnell durchführbaren und trotzdem sehr genauen Bildverbesserung und somit zu einer Reduktion von Codierungsartefakten bei blockbasierten Codierungsverfahren.

Das Verfahren gemäß Patentanspruch 1 weist im Wesentlichen dieselben Merkmale auf wie das oben beschriebene Verfahren. In dem Verfahren gemäß Patentanspruch 1 werden die Besonderheiten von objektbasierten Bildcodierungsverfahren berücksichtigt. Im Gegensatz zu blockbasierten Bildcodierungsverfahren, bei denen es gilt, die Blockartefakte an den Blockrändern zu glätten, was durch Berücksichtigung von Nachbarbildpunkten, die sich in anderen Bildblöcken als der Bildpunkt selbst bei der Ermittlung des neuen Farbwerts bzw. Helligkeitswerts erfolgt, so ist bei dem objektbasierten Bildcodierungsverfahren genau im Gegenteil die Notwendigkeit vorhanden, dass die Kanten an den Objekträndern erhalten bleiben und eben nicht eine Filterung über Objektkanten erfolgt.

Somit wird bei dem Verfahren bei objektbasierten Bildcodierungsverfahren der jeweilige Nachbarbildpunkt bei der Ermittlung des neuen Helligkeitswerts bzw. Farbwerts des Bildpunktes nur dann berücksichtigt, wenn zum einen der Unterschied der Helligkeitswerte bzw. Farbwerte kleiner ist als die Schranke und wenn der Bildpunkt und der Nachbarbildpunkt sich nicht in verschiedenen Bildobjekten des Bildes befinden. Somit wird eine unerwünschte Glättung von Objekträndern vermieden.

Bei der Bildcodiereinheit gemäß Patentanspruch 11 sind Mittel zur Transformationscodierung, zur Quantisierung der Transformationskoeffizienten, zur inversen Quantisierung der quantisierten Transformationskoeffizienten sowie zur inversen Transformationscodierung vorgesehen. Ferner ist ein Bildspeicher zur Speicherung von Bilddaten und ein Mittel zur Prädiktion von Bilddaten zweier zeitlich aufeinander folgender Bilder vorgesehen. Mit einem weiterhin vorgesehenen Mittel, welches derart ausgestaltet ist, dass eines der Verfahren zur Reduktion von Codierungsartefakten durchgeführt wird, wird eine Bildcodiereinheit vorgeschlagen, mit der ein so genanntes "Filter in the Loop" geschaffen wird. Auf diese Weise wird eine Verbesserung der Prädiktion realisiert, wodurch es möglich wird, die Menge zu codierender und zu übertragender Differenzbildinformation zu reduzieren. Durch diese Bildcodiereinheit wird eine, den üblichen Bildcodiereinheiten überlegene, genauere und schnellere Anordnung zur Bildcodierung vorgeschlagen, die zu einer geringeren Menge zu übertragender Bilddaten führt, verglichen mit bekannten Bildcodiereinheiten.

Die Bilddecodiereinheit gemäß Patentanspruch 13 weist neben Mitteln zur inversen Quantisierung und inversen Transformationscodierung einen Bildspeicher, ein Mittel zur Prädiktion von Bilddaten, sowie das Mittel zur Durchführung der Reduktion von Codierungsartefakten auf. Durch die Bilddecodiereinheit gemäß Patentanspruch 13 wird ein Bild decodiert und dem Benutzer dargestellt, welches eine erheblich höhere Qualität aufweist, als ein mit einer bekannten Decodiereinheit decodiertes Bild. Die Codierungsartefakte werden erheblich reduziert und das Verfahren ist sehr schnell durchführbar.

Vorteilhafte Weiterbildungen der Erfindung ergeben sich aus den abhängigen Ansprüchen.

Bei dem Verfahren im Rahmen der objektbasierten Bildcodierung ist es vorteilhaft, für den Fall, dass zusätzlich ein blockbasiertes Bildcodierungsverfahren verwendet wird, für die Nachbarbildpunkte zu überprüfen, ob der Bildpunkt und der Nachbarbildpunkt sich in demselben Bildblock befinden. Der Nachbarbildpunkt wird bei der Ermittlung des neuen Helligkeitswerts bzw. Farbwerts des Bildpunktes zusätzlich dann berücksichtigt, wenn der Bildpunkt und der Nachbarbildpunkt sich in verschiedenen Bildblöcken befinden. Dies entspricht der Situation, dass innerhalb eines Bildobjektes Blockartefakte, die durch Verwendung des blockbasierten Bildcodierungsverfahrens entstehen, geglättet werden sollen.

Ferner ist es in einer Weiterbildung der Verfahren vorteilhaft, den Helligkeitswert bzw. Farbwert des Bildpunktes selbst bei der Ermittlung des neuen Helligkeitswerts bzw. Farbwerts des Bildpunktes zu berücksichtigen. Dies führt zu einer weiter qualitativ verbesserten Decodierung, da durch diese Weiterbildung erreicht wird, dass das mit dem Verfahren behandelte Bild dem decodierten Bild möglichst ähnlich ist.

Weiterhin ist es in einer Weiterbildung des Verfahrens vorteilhaft, nur die Nachbarbildpunkte zu berücksichtigen, die direkt an den Bildpunkt angrenzen. Durch diese Weiterbildung wird das Verfahren erheblich einfacher gestaltet und somit unter Verwendung eines Rechners oder der Bildcodiereinheit zur Durchführung des Verfahrens erheblich beschleunigt. Dies ist darauf zurückzuführen, dass bei dieser Weiterbildung eine geringere Anzahl von Nachbarbildpunkten überhaupt nur bezüglich der oben beschriebenen Kriterien untersucht und berücksichtigt wird. Dies führt nur zu einem geringen Qualitätsverlust, da die hauptsächliche Information über die Helligkeitsunterschiede bzw. Farbunterschiede innerhalb eines Bildes bei direkt aneinandergrenzenden Bildpunkten enthalten ist.

Ferner ist es in einer Weiterbildung vorteilhaft, bei dem Verfahren in einer ersten Iteration die Nachbarbildpunkte, die sich in einer Umgebung entlang einer ersten Richtung bezüglich des Bildpunktes befinden und in einer zweiten Iteration nur diejenigen Nachbarbildpunkte in einer Umgebung des Bildpunktes entlang einer zweiten Richtung zu berücksichtigen.

Das Verfahren kann in einer Weiterbildung vorteilhafterweise mehrmals auf ein Bild angewendet werden, wodurch die Reduktion von Codierungsartefakten weiter verbessert wird. Ferner ist es vorteilhaft, nach jeder Iteration die Qualität des verbesserten Bildes zu ermitteln, und abhängig von der ermittelten Qualität zu entscheiden, ob eine weitere Iteration sinnvoll ist oder nicht. Auf diese Weise ist eine sehr genaue Abwägung der benötigten Qualität mit der entsprechend benötigten Rechenzeit zur Gewährleistung der benötigten Qualität für ein Bild möglich.

Das Verfahren kann vorteilhafterweise entweder zur Bildnachbearbeitung, also zur Bildverbesserung oder auch im Rahmen einer Prädiktion eines zu codierenden Bildes verwendet werden. Die Verwendung des Verfahrens bei der Prädiktion in einer Bildcodiereinheit ist vorteilhaft zur Reduktion eines bei der Bildung des Differenzbildes entstehenden Prädiktionsfehlers. Durch die Reduktion des Prädiktionsfehlers wird eine niedrigere Datenrate bei der Übertragung der Bildinformation sowie eine niedrigere Rechenkapazität, die zur Codierung benötigt wird, erreicht.

In den Figuren sind Ausführungsbeispiele der Erfindung dargestellt, die im Weiteren näher erläutert werden.

Es zeigen

Fig. 1    eine Skizze, in der ein Bild dargestellt ist, welches einem blockbasierten Bildcodierungsverfahren unterzogen wird;

Fig. 2    eine Skizze, in der ein Bild dargestellt ist, welches einem objektbasierten Bildcodierungsverfahren unterzogen wird;

Fig. 3    eine Skizze einer Bildcodiereinheit;

Fig. 4    eine Skizze einer Bilddecodiereinheit;

Fig. 5    ein Ablaufdiagramm, in dem das Verfahren für ein blockbasiertes Bildcodierungsverfahren dargestellt ist;

Fig. 6    ein Ablaufdiagramm, in dem die einzelnen Verfahrensschritte des Verfahrens in einem objektbasierten Bildcodierungsverfahren dargestellt ist;

Fig. 7    eine Rechneranordnung, mit der beispielsweise das Verfahren durchgeführt wird.

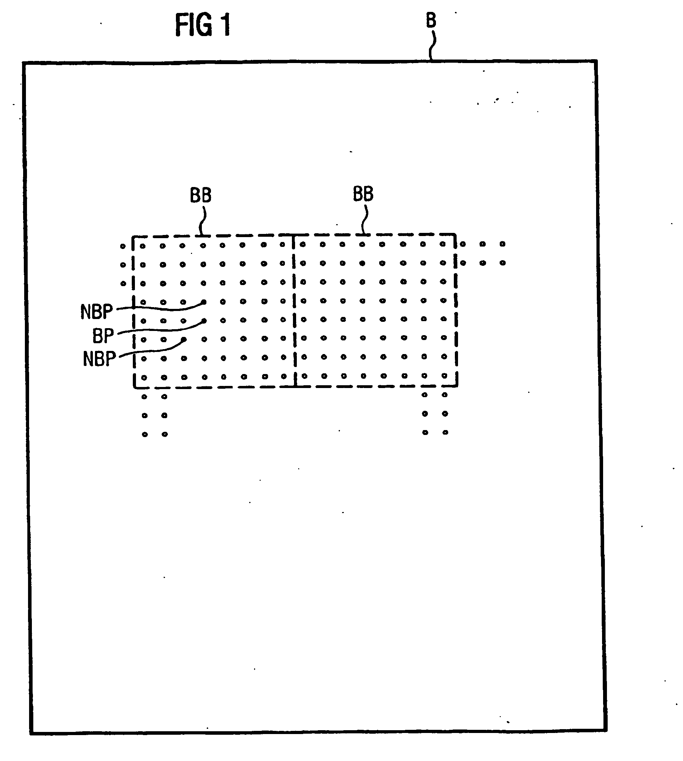

In Fig. 1 ist ein Bild B dargestellt, welches in digitalisierter Form vorliegt. Das Bild B weist eine beliebige Anzahl von Bildpunkten BP auf. Den Bildpunkten BP, deren Koordinaten innerhalb des Bildes B mit einem Zeilenindex i und einem Spaltenindex j eindeutig gekennzeichnet werden, werden in dem Bild B in eine Mehrzahl von Bildblöcken BB gruppiert. Ein Bildblock BB weist bei üblichen Bildcodierungsverfahren, beispielsweise dem MPEG-Verfahren oder dem JPEG-Verfahren, eine Größe von 8x8 Bildpunkten BP oder 16x16 Bildpunkten BP auf.

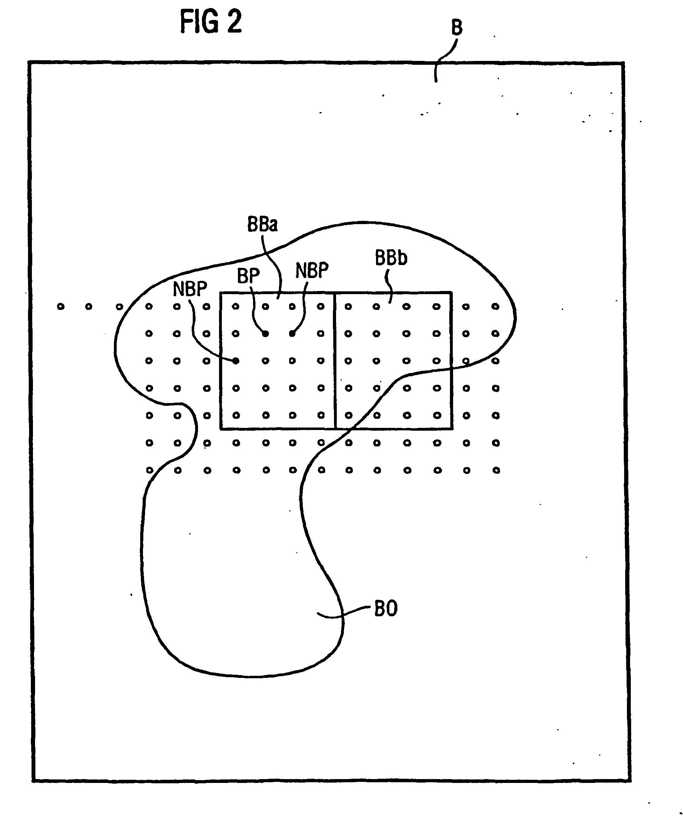

In Fig. 2 ist das Bild B dargestellt, welches einem objektbasierten Bildcodierungsverfahren unterzogen wird. Dabei wird das Bild B entsprechend seiner Semantik in verschiedene Bildobjekte BO segmentiert. Die Bildobjekte BO weisen eine beliebige Berandung und eine beliebige Anzahl von Bildpunkten BP auf.

Ferner sind Verfahren bekannt, bei denen objektbasierte Bildcodierungsverfahren und blockbasierte Codierungsverfahren miteinander kombiniert werden. Dies ist durch die Bildblöcke BBa und BBb innerhalb des Bildobjekts BO in Fig. 2 angedeutet.

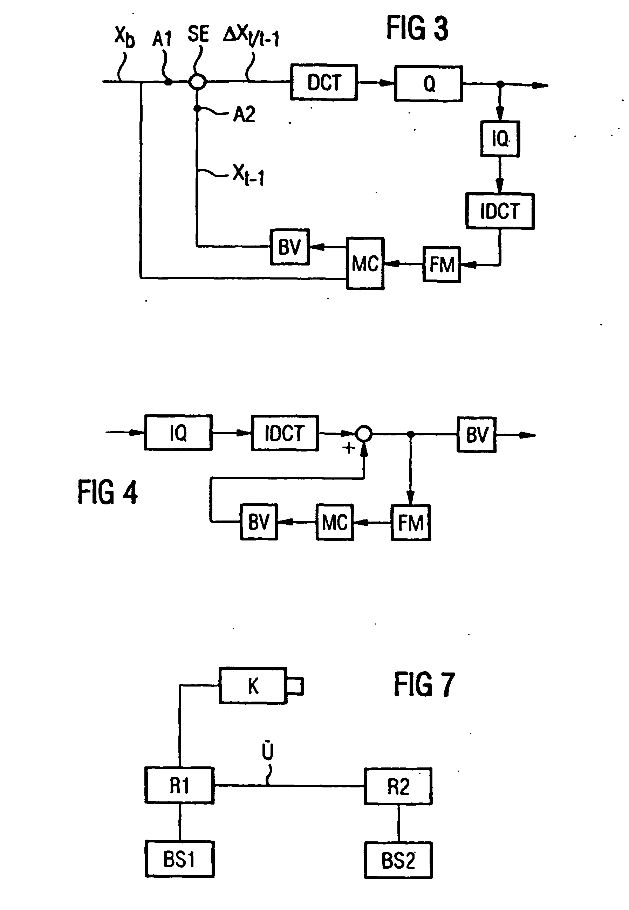

In Fig. 3 ist die Bildcodiereinheit dargestellt. Bilddaten $x_t$ eines zu codierenden Bildes B zu einem Zeitpunkt t werden der Bildcodiereinheit zugeführt. Die Bildcodiereinheit weist mindestens folgende Komponenten auf:

- Ein erstes Mittel DCT zur Transformationscodierung,
- ein zweites Mittel Q zur Quantisierung von Transformationscodierungskoeffizienten, die von dem ersten Mittel DCT gebildet werden und dem zweiten Mittel Q zugeführt werden,
- ein drittes Mittel IQ zur inversen Quantisierung der quantisierten Transformationskoeffizienten,
- ein viertes Mittel IDCT zur inversen Transformationscodierung der quantisierten Transformationskoeffizienten,
- einen Bildspeicher FM zur Speicherung von Bilddaten,
- ein fünftes Mittel MC zur Prädiktion von Bilddaten zweier zeitlich aufeinander folgender Bilder,
- ein sechstes Mittel BV zur Bildverbesserung.

In dem ersten Mittel DCT wird eine beliebige Transformationscodierung auf die dem ersten Mittel zugeführten Bilddaten $x_t$ angewendet, beispielsweise eine diskrete Cosinustransformation (DCT).

Ferner ist eine Subtraktionseinheit SE vorgesehen, der über einen ersten Eingang A1 die Bilddaten $x_t$ des zu codierenden Bildes B zum Zeitpunkt t zugeführt werden. Über einen zweiten Eingang A2 der Subtraktionseinheit SE werden der Subtraktionseinheit SE Bilddaten $x_{t-1}$ eines zeitlich vorangegangenen Bildes B zugeführt. Nach Differenzbildung der Bilddaten wird dem ersten Mittel DCT lediglich Differenzbildinformation $\Delta x_{t/t-1}$ zugeführt, so dass jeweils bei der Codierung eines Bildes die Differenzbildinformation übertragen wird. Ferner ist es jedoch auch vorgesehen, sog. Stützbilder zu übertragen, wobei nicht nur die Differenzinformation, sondern die gesamte Bildinformation $x_t$ dem ersten Mittel DCT zur Transformationscodierung zugeführt wird. Auf die Bilddaten $x_t$ bzw. den Differenzbilddaten $\Delta x_{t/t-1}$ wird eine Transformationscodierung angewendet, womit Transformationskoeffizienten für die Bilddaten $x_t$, $\Delta x_{t/t-1}$ bestimmt werden. Die Transformationskoeffizienten werden dem zweiten Mittel Q zugeführt und in dem zweiten Mittel Q quantisiert. Die quantisierten Transformationskoeffizienten werden, wie im Weiteren beschrieben wird, von einem erste Rechner R1 zu mindestens einem zweiten Rechner R2 übertragen. Um die Differenzbilddaten $\Delta x_{t/t-1}$ bestimmen zu können, werden die quantisierten Transformationskoeffizienten zur Prädiktion eines zeitlich nachfolgenden Bildes verwendet. Hierzu werden die quantisierten Transformacodiereinheit, in den Prädiktionspfad zur Rekonstruktion des Bildes B integriert.

Ist das sechste Mittel BV der eigentlichen Bilddecodierung nachgeschaltet, so bedeutet dies, dass dem sechsten Mittel BV decodierte Bilddaten in Form von den Bildpunkten BP zugeordneten Helligkeitswerten $g_{i,j}$ bzw. Farbwerten zugeführt. Den Bildpunkten BP werden bei den Bildcodierungsverfahren üblicherweise Helligkeitswerte $g_{i,j}$ und/oder Farbwerte zugeordnet. Im Weiteren wird zur einfacheren sprachlichen Darstellung des Verfahrens lediglich von Helligkeitswerten $g_{i,j}$, die den Bildpunkten BP zugeordnet werden, gesprochen. Dies bedeutet jedoch keinesfalls, dass nicht auch Farbwerte alleine oder zusammen mit den Helligkeitswerten $g_{i,j}$ im Rahmen der Bildcodierungsverfahren und dem erfindungsgemäßen Verfahren verwendet werden können.

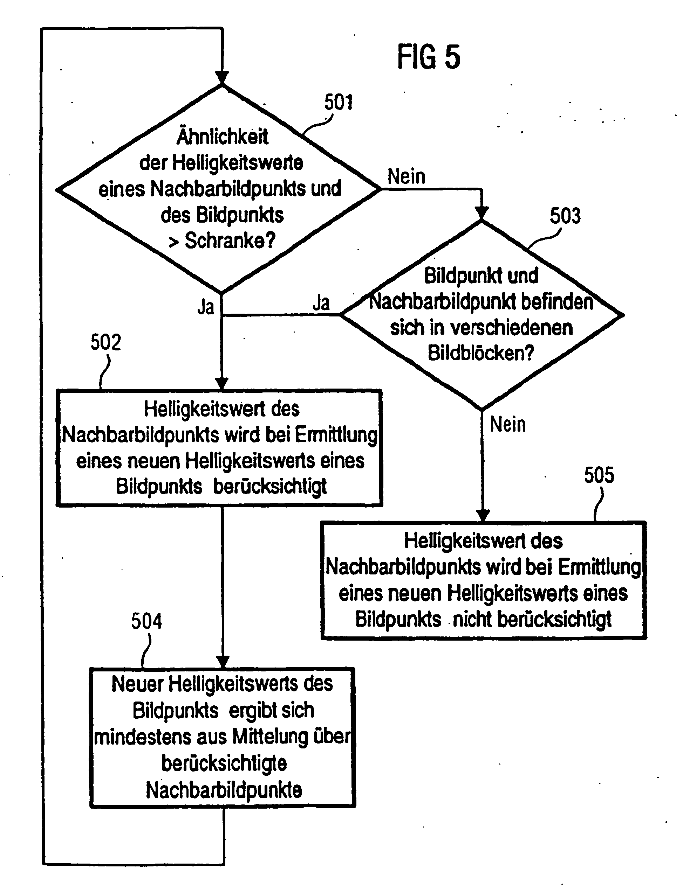

In Fig. 5 ist das Verfahren für ein blockbasiertes Bildcodierungsverfahren in seinen einzelnen Verfahrensschritten dargestellt.

Dabei werden für mindestens einen Teil des digitalisierten, decodierten Bildes B folgende Verfahrensschritte durchgeführt.

Es werden in einem ersten Schritt für mindestens einen Teil der Bildpunkte BP des Bildes B bzw. für das gesamte Bild B für Nachbarbildpunkte NBP, die sich in einer Umgebung beliebiger Form und Größe um den Bildpunkt BP befinden, untersucht, ob die Helligkeitswerte $g_{i,j}$ jeweils eines Nachbarbildpunktes NBP und des Bildpunktes BP sich deutlich voneinander unterscheiden 501. Ist dies der Fall, so bedeutet dies, dass wahrscheinlich die Teilstruktur in dem Bildbereich vorhanden ist, und somit diese bei der Decodierung erhalten bleiben sollte. Ist dies jedoch nicht der Fall, so deutet dies darauf hin, dass der Bildbereich homogen ist, und somit ist es günstig, den Bereich zwischen dem Bildpunkt BP und dem Nachbarbildpunkt NBP zu glätten.

Die Umgebung des Bildpunktes BP, innerhalb der die Nachbarbildpunkte NBP untersucht werden, weist eine beliebige Form und Größe auf. Zur Beschleunigung der Durchführung des Verfahrens ist es jedoch in einer Weiterbildung des Verfahrens vorgesehen, dass lediglich direkt benachbarte Bildpunkte des Bildpunktes BP als Nachbarbildpunkte NBP verwendet und untersucht werden.

Zur Reduktion von Codierungsartefakten wird für den Bildpunkt BP, dem ein Helligkeitswert $f_{i,j}$ zugeordnet wurde, ein neuer Helligkeitswert $g_{i,j}$ ermittelt. Dabei ergibt sich der neue Helligkeitswert $g_{i,j}$ jeweils mindestens aus den Helligkeitswerten $g_{i,j}$ der Nachbarbildpunkte NBP, die bei der Ermittlung des neuen Helligkeitswerts $g_{i,j}$ des Bildpunktes BP berücksichtigt werden. Zwei Kriterien werden bei der Beurteilung, ob ein Nachbarbildpunkt NBP berücksichtigt wird oder nicht, angewendet.

Zum einen wird überprüft, ob der Helligkeitswert des Nachbarbildpunktes NBP dem Helligkeitswert $f_{i,j}$ des Bildpunktes BP bezüglich einer Ähnlichkeitstoleranz ähnlich genug ist. Die Ähnlichkeitstoleranz wird durch eine vorgebbare Schranke S durch einen Entwickler des Verfahrens bzw. durch den Benutzer empirisch festgelegt und ist frei vorgebbar.

Ist der Unterschied des Helligkeitswerts des Nachbarbildpunktes NBP und dem Helligkeitswert $f_{i,j}$ des Bildpunktes BP, beispielsweise der Absolutbetrag der Differenz der Helligkeitswerte oder auch das Quadrat oder eine beliebige Potenz der Differenz der Helligkeitswerte kleiner als die Schranke S, so wird der jeweilige Nachbarbildpunkt bei der Ermittlung des neuen Helligkeitswerts $g_{i,j}$ des Bildpunktes BP berücksichtigt 502.

Ferner wird bei blockbasierten Bildcodierungsverfahren ein Nachbarbildpunkt NBP auch dann berücksichtigt 502, wenn sich der Nachbarbildpunkt NBP in einem anderen Bildblock BB befintionskoeffizienten in dem dritten Mittel IQ invers quantisiert und die invers quantisierten Transformationskoeffizienten werden einer inversen Transformationscodierung IDCT in dem vierten Mittel IDCT unterzogen. Durch Prädiktion, beispielsweise einer Bewegungsschätzung von Bildblöcken BB bzw. Bildobjekten BO in zwei zeitlich aufeinander folgenden Bildern B in dem fünften Mittel MC wird zeitliche Redundanz in der Bildinformation ermittelt und durch Differenzbildung in der Subtraktionseinheit SE herausgefiltert und somit nicht mehr codiert und auch nicht mehr übertragen.

Die Ausgestaltung des sechsten Mittels BV zur Bildverbesserung in dem Prädiktionspfad der Bildcodiereinheit wird im Zusammenhang mit dem erfindungsgemäßen Verfahren detailliert erläutert. Das sechste Mittel BV zur Bildverbesserung ist derart ausgestaltet, dass das im Weiteren beschriebene Verfahren von dem sechsten Mittels BV durchgeführt wird.

In einer Weiterbildung der Bildcodiereinheit ist ein siebtes Mittel (nicht dargestellt) zur Segmentierung des Bildes in Bildblöcke (BB) bei blockbasierten Bildcodierungsverfahren bzw. in Bildobjekte BO bei objektbasierten Bildcodierungsverfahren vorgesehen.

In Fig. 4 ist eine Bilddecodiereinheit, die auf denselben Prinzipien wie die Bildcodiereinheit beruht, dargestellt. Die Bilddecodiereinheit weist mindestens folgende Komponenten auf:

- Das dritte Mittel IQ,
- das vierte Mittel IDCT,
- den Bildspeicher FM,
- das fünfte Mittel MC, sowie
- mindestens ein sechstes Mittel BV zur Bildverbesserung.

Bei der Bilddecodiereinheit ist die Bildverbesserung, also die Reduktion von Codierungsartefakten der eigentlichen Bilddecodierung nachgeschaltet und/oder, ebenso wie bei der Bilddet als der Bildpunkt BP 503. In diesem Fall liegt zwischen dem Nachbarbildpunkt NBP und dem Bildpunkt BP ein Blockrand, der zu den sog. Blocking-Artefakten führt, deren störender Einfluss auf die Bildqualität durch eine Tiefpassfilterung des Blockrandes gemindert werden kann. Dieser Tiefpassfilterung entspricht die Berücksichtigung des Nachbarbildpunktes mit dieser Eigenschaft bei der Ermittlung des neuen Helligkeitswerts $g_{i,j}$ für den Bildpunkt BP.

Sonst wird der Nachbarbildpunkt NBP nicht berücksichtigt 505.

Der neue Helligkeitswert $g_{i,j}$ ergibt sich durch Mittelung von Helligkeitswerten $g_{i,j}$ berücksichtigter Nachbarbildpunkte NBP 504. Die Mittelung kann über die einzelnen Helligkeitswerte der Nachbarbildpunkte NBP in beliebiger Weise gewichtet werden.

In einer Weiterbildung des Verfahrens ist es vorgesehen, auch den Helligkeitswert $f_{i,j}$ des Bildpunktes BP bei der Ermittlung des neuen Helligkeitswerts $g_{i,j}$ des Bildpunktes BP zu berücksichtigen.

Diese anschauliche Vorgehensweise lässt sich beispielsweise in folgender deterministischer Vorschrift formulieren:

$$g_{i,j} = \frac{1}{1+n\lambda}\left(f_{i,j} + \lambda\left(\delta_{i,j-1} \cdot g_{i,j-1} + \delta_{i-1,j} \cdot g_{i-1,j} + \delta_{i,j+1} \cdot g_{i,j+1} + \delta_{i+1,j} \cdot g_{i+1,j}\right)\right)$$

$$(1)$$

mit

$$\delta_{i,j-1} = \begin{cases} 1 & \textit{wenn } \left| g_{i,j} - g_{i,j-1} \right| \leq S \quad \textit{oder} \\ & \textit{wenn } g_{i,j} \textit{ und } g_{i,j-1} \textit{ über einer Blockgrenze liegen} \\ 0 & \textit{sonst} \end{cases} \qquad (2).$$

Die Werte für $\delta_{i-1,j}$, $\delta_{i,j+1}$, $\delta_{i+1,j}$ werden jeweils analog zu der Gleichung (2) ermittelt.

Mit n wird die Anzahl berücksichtigter Nachbarbildpunkte NBP beschrieben.

Die oben beschriebenen Gleichungen gelten für die Weiterbildung des Verfahrens, bei dem der Helligkeitswert $f_{i,j}$ des Bildpunktes BP selbst berücksichtigt wird. Bei Nichtberücksichtigung des Helligkeitswerts $f_{i,j}$ des Bildpunktes BP wird lediglich der Summand 1 in dem Nenner des Bruchs, sowie der Summand $f_{i,j}$ in der obigen Gleichung weggelassen.

Die oben beschriebenen Gleichungen beschreiben das Verfahren für eine Umgebung von untersuchten Nachbarbildpunkten NBP, die jeweils zu dem Bildpunkt BP direkt benachbart und sich jeweils in derselben Spalte bzw. derselben Zeile des Bildpunktes BP befinden. Für eine andere Form bzw. Größe der Umgebung untersuchter Nachbarbildpunkte NBP werden lediglich die Summanden $\delta_{i,j-1}$, etc. sowie die Helligkeitswerte $g_{i,j-1}$, etc. der größeren Umgebung angepasst.

Ferner ist es in dem Verfahren nicht notwendig, wie der oben beschriebenen Gleichung (2) angegeben, einen Absolutbetrag der Differenz der Helligkeitswerte von einem Nachbarbildpunkt NBP und dem Bildpunkt BP als Ähnlichkeitskriterium der Berücksichtigung der Nachbarbildpunkte NBP zu verwenden. Es ist jegliches Ähnlichkeitskriterium verwendbar, beispielsweise die Bildung einer beliebigen Potenz der Differenz der Helligkeitswerte.

Mit einem freien Parameter $\lambda$ wird festgelegt, ob bei der Ermittlung des neuen Helligkeitswerts $g_{i,j}$ des Bildpunktes BP bei der Weiterbildung mit der Berücksichtigung des Helligkeitswerts $f_{i,j}$ des Bildpunktes BP mehr Gewicht auf die Originaltreue zum decodierten Bild oder mehr Gewicht auf die Glättung der Codierfehler gelegt werden soll. Es hat sich als ein geeigneter Kompromiss als vorteilhaft herausgestellt, beispielsweise einen Wert für den freien Parameter $\lambda = 1$ zu verwenden.

Für die Schwelle S hat sich bei den oben beschriebenen Formeln (1) und (2) in Experimenten ein Wert der Schwelle S zwischen 5 und 10 bei einer Quantisierung der Helligkeitswerte in Werte zwischen 0 und 255 als vorteilhaft herausgestellt.

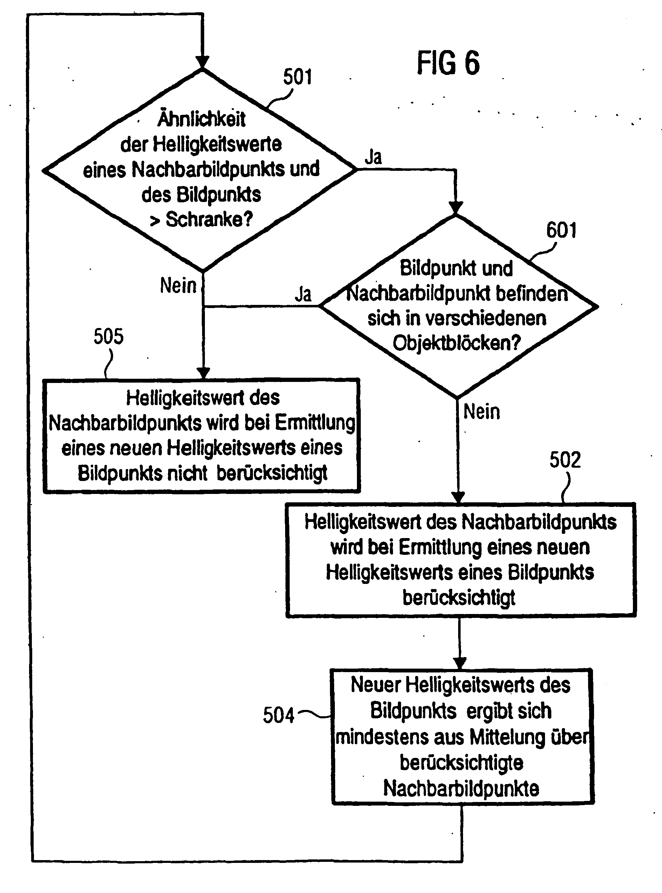

Bei Verwendung eines objektbasierten Bildcodierungsverfahrens, welches in seinen Verfahrensschritten in Fig. 6 dargestellt ist, sind die Verfahrensschritte prinzipiell äquivalent, mit dem Unterschied, dass das Kriterium, das die Nachbarbildpunkte NBP auch dann berücksichtigt werden, wenn sie in einem anderen Bildblock BB liegen als der Bildpunkt BP, nicht verwendet wird. Im Gegenteil wird bei objektbasierten Bildcodierungsverfahren ja gerade darauf Wert gelegt, dass die durch die verschiedenen Bildobjekte BO gebildeten Objektkanten als Detailstruktur erhalten bleiben und somit dürfen diese Strukturen nicht geglättet werden.

Es ergibt sich beispielsweise folgende Vorschrift bei Verwendung eines objektbasierten Bildcodierungsverfahrens im Rahmen des erfindungsgemäßen Verfahrens:

$$g_{i,j} = \frac{1}{1+n\lambda}\left(f_{i,j} + \lambda\left(\delta_{i,j-1} \cdot g_{i,j-1} + \delta_{i-1,j} \cdot g_{i-1,j} + \delta_{i,j+1} \cdot g_{i,j+1} + \delta_{i+1,j} \cdot g_{i+1,j}\right)\right)$$

$$(3)$$

mit

$$\delta_{i,j-1} = \begin{cases} 1 & \textit{wenn } \left| g_{i,j} - g_{i,j-1} \right| \leq S \textit{ und} \\ & \textit{wenn } g_{i,j} \textit{ und } g_{i,j-1} \textit{ nicht über einer Objektgrenze liegen} \\ 0 & \textit{sonst} \end{cases} \qquad (4).$$

Es wird in Abänderung zu den Formeln (1) und (2) nur dann ein Nachbarbildpunkt NBP bei der Ermittlung des neuen Helligkeitswerts $g_{i,j}$ des Bildpunktes BP berücksichtigt, wenn sowohl der Nachbarbildpunkt NBP als auch der Bildpunkt BP in demselben Bildobjekt BO sich befinden 601.

In einer Weiterbildung des Verfahrens, welches im Rahmen von objektbasierten Bildcodierungsverfahren verwendet wird, ist es vorgesehen, dass für den Fall, dass zusätzlich auch ein blockbasiertes Bildcodierungsverfahren eingesetzt wird, und für den Fall, dass das Bildobjekt BO eine Mehrzahl von Bildblöcken BB aufweist, für den jeweiligen Nachbarbildpunkt NBP überprüft wird, ob sich der Nachbarbildpunkt NBP und der Bildpunkt BP in demselben Bildobjekt BO befinden und innerhalb des Bildobjekts BO auch in demselben Bildblock BB befinden. Der Nachbarbildpunkt NBP wird bei der Ermittlung des neuen Helligkeitswerts i, j des Bildpunktes BP zusätzlich dann berücksichtigt, falls sich der Bildpunkt BP und der Nachbarbildpunkt NBP in verschiedenen Bildblöcken BB des Bildobjekts BO befinden.

Das Verfahren kann für die Bildpunkte BP eines Bildes B beispielsweise zeilenweise oder spaltenweise durchgeführt werden.

Ferner ist es in einer Weiterbildung des Verfahrens vorgesehen, bei der Ermittlung eines neuen Helligkeitswerts $g_{i,j}$ des Bildpunktes BP in einer ersten Iteration nur Bildpunkte als Nachbarbildpunkte NBP zu untersuchen, die entlang einer ersten Richtung in der Umgebung des Bildpunktes BP, beispielsweise einer Zeile liegen und in einer zweiten Iteration nur die Bildpunkte zu berücksichtigen, die in einer Umgebung entlang einer zweiten Richtung, beispielsweise einer Spalte des Bildpunktes BP zu berücksichtigen.

Ferner ist es in einer Weiterbildung des Verfahrens vorgesehen, mehrere Iterationen für ein Bild B bei der Bildverbesserung zur Eliminierung der Codierungsartefakte durchzuführen. Dies führt zu einer weiteren Verbesserung des schließlich einem Benutzer dargestellten, decodierten Bildes.

Bei dieser Weiterbildung ist es ferner vorteilhaft, am Ende jeder Iteration ein Qualitätsmaß zur Bewertung der Qualität des verbesserten Bildes zu ermitteln. Abhängig von der ermittelten Qualität wird dann entschieden, ob eine weitere Iteration zur Bildverbesserung nötig ist oder nicht. Dies kann abhängig von einer vorgegebenen Mindestqualität für das schließlich dargestellte Bild erfolgen.

Die erforderliche Qualität ist hierbei frei vorgebbar. Das oben beschriebene Verfahren kann beispielsweise vorteilhaft isoliert als Bildverbesserungsverfahren, in Verbindung mit der Bilddecodierung oder auch bei der Bildcodierung selbst, bei der Prädiktion zeitlich aufeinander folgender Bilder eingesetzt werden.

In Figur 7 ist eine Rechneranordnung dargestellt, mit der das Verfahren üblicherweise durchgeführt wird. Mit einer Kamera K werden Bilder aufgenommen, die in der Kamera K oder in einem mit der Kamera K gekoppelten ersten Rechner R1 zu dem Bild B digitalisiert werden.

Der erste Rechner R1 ist zum einen mit einem ersten Bildschirm BS1 und zum anderen über eine Kopplung Ü mit einem zweiten Rechner R2 gekoppelt.

In dem ersten Rechner R1 wird das Bild B codiert und zu dem zweiten Rechner R2 übertragen. In dem zweiten Rechner R2 wird das Bild B decodiert und auf einem zweiten Bildschirm B2 einem Betrachter des Bildes B dargestellt.

In diesem Dokument wurden folgende Veröffentlichungen zitiert:

[1] G. Wallace, The JPEG Still Picture Compression Standard, Communications of the ACM, Vol. 34, No. 4, S. 31-44, April 1991, 1991

[2] D. Le Gall, The Video Compression Standard for Multimedia Applications, Communications of the ACM, Vol. 34, No. 4, S. 47-58, April 1991, 1991

[3] Ming Liou, Overview of the px64 kbit/s Video Coding Standard, Communications of the ACM, Vol. 34, No. 4, S. 60-63, April 1991, 1991

[4] H. G. Musmann et al, Object-Oriented Analysis-Synthesis Coding of Moving Images, Signal Processing: Image Communication, Vol. 1, No. 2, S. 117 - 138, Oktober 1989

[5] MPEG-4, Video Verification Model Version 2.0, ISO/IEC JTC 1/ SC 29, WG 11, N 1260, S. 9 - 32, März 1996

[6] T. Özcelik et al, Image and Video Compression Algorithms Based on Recovery Techniques Using Mean Field Annealing, Proceedings of the IEEE, Vol. 83, No. 2, S. 304-316, 1995

[7] G. Bjontegaard, A Simple at Loop Filter to Reduce Blocking and Moscito Noise, ISO/IEC, 1/SC29/WG11 Dokument Nr. MPEG 96/0617, Januar 1996

[8] T. P. O'Rourke et al, Improved Image Decompression for Reduced Transform Coding Artifacts, IEEE Transactions on Circuits and Systems for Video Technology, No. 5, S. 490-499, 1995

[9] Y. Yang et al, Regularized Reconstruction to Reduce Blocking Artifacts of Block Discrete Cosine Transform Compressed Images, IEEE Transactions on Circuits and Systems for Video Technology, No. 3, S. 421-432, 1993

[10] A. Blake und A. Zisserman, Visual Reconstruction, MIT-Press, ISBN 0-262-02271-0, Cambridge, Mass., Seiten 111-125, 1987

**Patentansprüche**

1. Verfahren zur Eliminierung von Codierungsartefakten von objektbasierten Bildcodierungsverfahren, durch einen Rechner,

   - bei dem für Bildpunkte (BP) mindestens eines Teils eines digitalisierten, decodierten Bildes (B) folgende Schritte durchgeführt werden:
   - für Nachbarbildpunkte (NBP), die sich in einer Umgebung des jeweiligen Bildpunktes (BP) befinden, wird überprüft, ob der Betrag der Differenz zwischen einem Helligkeitswert oder einem Farbwert des Bildpunktes (BP) und jeweils einem Helligkeitswert oder einem Farbwert eines Nachbarbildpunkts (NBP) kleiner ist als eine vorgebbare Schranke (S),
   **dadurch gekennzeichnet, dass**
   - der Helligkeitswert oder der Farbwert des jeweiligen Nachbarbildpunkts (NBP) wird bei einer Ermittlung eines neuen Helligheitswerts oder eines neuen Farbwerts des Bildpunktes (BP) berücksichtigt, falls

      -- der Betrag der Differenz kleiner ist als die Schranke (S), und
      -- der Bildpunkt (BP) und der Nachbarbildpunkt (NBP) sich nicht in verschiedenen Bildobjekten (BO) des Bildes (B) befinden, und

   - der neue Helligheitswert oder der neue Farbwert des Bildpunktes (BP) ergibt sich durch eine gewichtete Mittelung aller berücksichtigten Helligheitswerte oder aller berücksichtigten Farbwert der Nachbarbildpunkte (NBP).

2. Verfahren nach Anspruch 1,

   - bei dem für den Fall, dass im Rahmen des objektbasierten Bildcodierungsverfahren zusätzlich ein blockbasiertes Bildcodierungsverfahren verwendet wird und, dass ein Bildobjekt (BO) verschiedene Bildblöcke aufweist, überprüft wird, ob sich der Bildpunkt (BP) und der Nachbarbildpunkt (NBP), die sich beide in demselben Bildobjekt (BO) befinden, in verschiedenen Bildblöcken des Bildobjekts (BO) befinden, und
   - bei dem der Helligheitswert oder der Farbwert des jeweiligen Nachbarbildpunkts (NBP) bei der Ermittlung des neuen Werts des Bildpunktes (BP) berücksichtigt wird, falls der Bildpunkt (BP) und der Nachbarbildpunkt (NBP) sich in verschiedenen Bildblöcken (BB) des Bildobjekts (BO) befinden.

3. Verfahren nach einem der Ansprüche 1 bis 2,
   bei dem der Helligheitswert oder der Farbwert des Bildpunkts (BP) bei der Ermittlung des neuen Helligheitswert oder der Farbwert des Bildpunktes (BP) berücksichtigt wird.

4. Verfahren nach einem der Ansprüche 1 bis 3,
   bei dem als Nachbarbildpunkte (NBP) nur direkt an den Bildpunkt angrenzende Bildpunkte verwendet werden.

5. Verfahren nach einem der Ansprüche 1 bis 4,
   bei dem das Verfahren für die Bildpunkte (BP) innerhalb des Bildes (B) zeilenweise oder spaltenweise durchgeführt wird.

6. Verfahren nach einem der Ansprüche 1 bis 5,

   - bei dem in einer ersten Iteration des Verfahren in einer Reihenfolge für die Bildpunkte (BP) entlang einer ersten Richtung (R1) durchgeführt wird, und
   - bei dem in einer zweiten Iteration des Verfahren in einer Reihenfolge für die Bildpunkte (BP) entlang einer zweiten Richtung (R2) durchgeführt wird.

**7.** Verfahren nach Anspruch 6,

- bei dem in der ersten Iteration als Nachbarbildpunkte (NBP) nur Bildpunkte verwendet werden, die sich in einer Umgebung des Bildpunktes (BP) entlang der ersten Richtung (R1) befinden, und
- bei dem in der zweiten Iteration als Nachbarbildpunkte (NBP) nur Bildpunkte verwendet werden, die sich in einer Umgebung des Bildpunktes (BP) entlang der zweiten Richtung (R1) befinden.

**8.** Verfahren nach einem der Ansprüche 1 bis 7,
bei dem das Verfahren mehrmals auf ein Bild (B) angewendet wird, wobei nach jeder Iteration bezüglich des Bildes ein Qualitätsmaß ermittelt wird, und eine neue Iteration für das Bild (B) durchgeführt wird, falls das ermittelte Qualitätsmaß unter einer vorgebbaren Qualitätsschranke liegt.

**9.** Verwendung des Verfahrens nach einem der Ansprüche 1 bis 8 zur Bildnachbearbeitung.

**10.** Verwendung des Verfahrens nach einem der Ansprüche 1 bis 8 bei der Prädiktion des Bildes (B) im Rahmen der Bildcodierung und/oder Bilddecodierung.

**11.** Bildcodiereinheit zur Codierung von digitalisierten Bildern,

- mit einem ersten Mittel (DCT) zur Transformationscodierung,
- mit einem zweiten Mittel (Q) zur Quantisierung von Transformationskoeffizienten, die bei der Transformationscodierung von dem ersten Mittel (DCT) gebildet wurden,
- mit einem dritten Mittel (IQ) zur inversen Quantisierung von quantisierten Transformationskoeffizienten,
- mit einem vierten Mittel (IDCT) zur inversen Transformationscodierung,
- mit einem Bildspeicher (FM) zur Speicherung von Bilddaten,
- mit einem fünften Mittel (MC) zur Prädiktion von Bilddaten zweier zeitlich aufeinander folgender Bilder,
- mit einer Subtraktionseinheit (SE), der zum einen Bilddaten eines zu codierenden Bildes und zum anderen Bilddaten eines zeitlich vorangegangenen Bildes zugeführt werden, so dass dem ersten Mittel (DCT) nur Differenzbilddaten zweier aufeinander folgender Bilder zugeführt und codiert werden, und
- mit einem sechsten Mittel (BV) zur Eliminierung von Codierungsartefakten, die derart ausgestaltet ist, dass das Verfahren nach einem der Ansprüche 1 bis 8 in dem sechsten Mittel (BV) durchgeführt wird.

**12.** Bildcodiereinheit nach Anspruch 11,
mit einem siebten Mittel (SEG) zur Segmentierung des Bildes in Bildblöcke (BB) und/oder Bildobjekte (BO).

**13.** Bilddecodiereinheit zur Codierung von digitalisierten Bildern,

- mit einem dritten Mittel (IQ) zur inversen Quantisierung von quantisierten Transformationskoeffizienten,
- mit einem vierten Mittel (IDCT) zur inversen Transformationscodierung,
- mit einem Bildspeicher (FM) zur Speicherung von Bilddaten,
- mit einem fünften Mittel (MC) zur Prädiktion von Bilddaten zweier zeitlich aufeinander folgender Bilder,
- mit einer Addiereinheit (AE), der zum die quantisierten Transformationskoeffizienten eines zu decodierenden Bildes und zum anderen Bilddaten eines zeitlich vorangegangenen decodierten Bildes zugeführt werden, so dass dem dritten Mittel (IQ) prädizierte Bilddaten zweier aufeinander folgender Bilder zugeführt und decodiert werden, und
- mit einem sechsten Mittel (BV) zur Eliminierung von Codierungsartefakten, die derart ausgestaltet ist, dass das Verfahren nach einem der Ansprüche 1 bis 8 in dem sechsten Mittel (BV) durchgeführt wird.

**Claims**

**1.** Method for eliminating coding artifacts from object-based image encoding methods, using a computer,

- in which the following steps are performed for picture elements (BP) of at least a part of a digitized, decoded image (B):
- checking for neighbouring picture elements (NBP) that are located in an environment of a respective picture element (BP) to see whether the amount of a difference between a brightness value or a colour value of the picture element (BP) and a respective brightness value and a colour value of a neighbouring picture element (NBP) is below a predetermined threshold (S),

**characterised in that**

- the brightness value and the colour value of the respective neighbouring picture element (NBP) are taken into consideration in determining a new brightness value or a new colour value of the picture element (BP) if

-- the amount of the difference is lower than the threshold (S), and

-- the picture element (BP) and the neighbouring picture element (NBP) are not located in different image objects (BO) of the image (B), and

- the new brightness value and the new colour value of the picture element (BP) are derived using a weighted averaging of all brightness values or colour values of the neighbouring picture elements (NBP).

2. Method according to claim 1,

- for which, in the event of a block-based image encoding method additionally being used within the framework of the object-based image encoding method and of an image object (BO) having different image blocks, a check is made as to whether the image element (BP) and the neighbouring image element (NBP) that are both located in the same image object (BO) are located in different image blocks of the image object (BO) and

- in which the brightness value or the colour value of the respective neighbouring image element (NBP) is taken into account when determining the new value of the image element (BP) if the image element (BP) and the neighbouring image element (NBP) are located in different image blocks (BB) of the image object (BO).

3. Method according to one of claims 1 or 2,

in which the brightness value or the colour value of the image element (BP) is taken into account when determining the new brightness value or the new colour value of the image element (BP).

4. Method according to one of claims 1 to 3,

in which only picture elements directly adjoining the picture element are employed as the neighbouring picture elements (NBP).

5. Method according to one of claims 1 to 4,

in which the method is implemented row-by-row or column-by-column for the picture elements (BP) within the image (B).

6. Method according to one of all claims 1 to 5 taken into account,

- in which, in a first iteration, the method is performed in a sequence for the picture elements (BP) in a first direction (R1), and

- in which, in a second iteration, the method is performed in a sequence for the picture elements (BP) in a second direction (R2).

7. Method according to claim 6,

- in which, in a first iteration, only picture elements that are located in an environment of the picture element (BP) in the first direction (R1) are employed as neighbouring picture elements (NBP), and

- in which, in a second iteration, only picture elements that are located in an environment of the picture element (BP) in the second direction (R1) are employed as neighbouring picture elements (NBP).

8. Method according to one of claims 1 to 7,

in which the method is applied repeatedly to an image (B), with a quality criterion with respect to the image (B) being determined after each iteration and a new iteration being implemented for the image (B) if the determined quality criterion lies below a predetermined quality threshold.

9. Use of the method according to one of claims 1 to 8 for image post-processing.

10. Use of the method according to one of claims 1 to 8 in the prediction of the image (B) as part of image encoding and/or decoding.

**11.** An image coding unit for encoding digitized images,

- with a first means (DCT) for transformation coding,
- with a second means (Q) for quantizing transformation coefficients that were formed by the first means (DCT) during the transformation coding,
- with a third means (IQ) for the inverse quantization of quantized transformation coefficients,
- with a fourth means (IDCT) for inverse transformation coding,
- with image storage (FM) for storing image data,
- with a fifth means (MC) for predicting image data of two chronologically successive images,
- with a subtraction unit (SE) to which, on the one hand, image data of an image to be encoded and, on the other hand, image data of a chronologically preceding image is supplied, so that only difference image data of two successive images is supplied to the first means (DCT) and encoded, and
- with a sixth means (BV) for eliminating coding artifacts embodied such that the method is performed according to one of claims 1 to 8 in the sixth means (BV).

**12.** The image coding unit according to claim 11,
with a seventh means (SEG) for segmenting the image into image blocks (BB) and/or image objects (BO).

**13.** An image coding unit for encoding digitized images,

- with a third means (IQ) for the inverse quantization of quantized transformation coefficients,
- with a fourth means (IDCT) for inverse transformation coding,
- with image storage (FM) for storing image data,
- with a fifth means (MC) for predicting image data of two chronologically successive images,
- with an adder unit (AE) to which, on the one hand the quantized transformation coefficients of an image to be decoded and, on the other hand image data of a chronologically preceding, decoded image are supplied, so that predicted image data of two successive images is supplied to the third means (IQ) and decoded, and
- with a sixth means (BV) for eliminating coding artifacts embodied such that the method is performed according to one of claims 1 to 8 in the sixth means (BV).

**Revendications**

**1.** Procédé d'élimination d'artefacts de codage de procédés de codage d'image basé objets, par un ordinateur,

- dans lequel on exécute les étapes suivantes pour des points d'image (BP) d'au moins une partie d'une image (B) numérisée décodée :
- on vérifie, pour des points d'image voisins (NBP) qui se trouvent dans un environnement du point d'image respectif (BP) si la grandeur de la différence entre une valeur de luminosité ou une valeur de couleur du point d'image (BP) et, à chaque fois, une valeur de luminosité ou une valeur de couleur d'un point d'image voisin (NBP) est inférieure à une limite (S) prédéfinissable,
**caractérisé en ce que**
- la valeur de luminosité ou la valeur de couleur du point d'image voisin respectif (NBP) est prise en compte lors d'une détermination d'une nouvelle valeur de luminosité ou d'une nouvelle valeur de couleur du point d'image (BP) dans le cas où

-- la grandeur de la différence est inférieure à la limite (S) et
-- le point d'image (BP) et le point d'image voisin NBP) ne se trouvent pas dans des objets d'image différents (BO) de l'image (B) et

- la nouvelle valeur de luminosité ou la nouvelle valeur de couleur du point d'image (BP) est obtenue en formant une moyenne pondérée de toutes les valeurs de luminosité ou toutes les valeurs de couleur prises en compte des points d'image voisins (NBP).

**2.** Procédé selon la revendication 1,

- dans lequel, dans le cas où on utilise en plus, dans le cadre du procédé de codage d'image basé objets, un procédé de codage d'image basé blocs et où un objet d'image (BO) comprend plusieurs blocs d'image, on vérifie si le point d'image (BP) et le point d'image voisin (NBP) qui se trouvent tous les deux dans le même objet d'image (BO) se trouvent dans des blocs d'image différents de l'objet d'image (BO) et

- dans lequel la valeur de luminosité ou la valeur de couleur du point d'image voisin respectif (NBP) est prise en compte lors de la détermination de la nouvelle valeur du point d'image (BP) dans le cas où le point d'image (BP) et le point d'image voisin (NBP) se trouvent dans des blocs d'image (BB) différents de l'objet d'image (BO).

3. Procédé selon l'une des revendications 1 à 2, dans lequel la valeur de luminosité ou la valeur de couleur du point d'image (BP) est prise en compte lors de la détermination de la nouvelle valeur de luminosité ou de la nouvelle valeur de couleur du point d' image (BP).

4. Procédé selon l'une des revendications 1 à 3, dans lequel on n'utilise, en tant que points d'image voisins (NBP), que les points d'images qui sont directement contigus au point d'image.

5. Procédé selon l'une des revendications 1 à 4, dans lequel le procédé est exécuté ligne par ligne ou colonne par colonne pour les points d'image (BP) à l'intérieur de l'image (B).

6. Procédé selon l'une des revendications 1 à 5,

   - dans lequel, dans une première itération, le procédé est exécuté dans un ordre pour les points d'image (BP) le long d'une première direction (R1) et
   - dans lequel, dans une seconde itération, le procédéest exécuté dans un ordre pour les points d'image (BP) le long d'une seconde direction (R2).

7. Procédé selon la revendication 6,

   - dans lequel, dans la première itération, on n'utilise, en tant que points d'image voisins (NBP), que des points d'image qui se trouvent dans un environnement du point d'image (BP) le long de la première direction (R1) et
   - dans lequel, dans la seconde itération, on n'utilise, en tant que points d'image voisins (NBP), que des points d'image qui se trouvent dans un environnement du point d'image (BP) le long de la seconde direction (R1).

8. Procédé selon l'une des revendications 1 à 7, dans lequel le procédé est appliqué plusieurs fois à une image (B), une mesure de qualité concernant l'image étant déterminée après chaque itération et une nouvelle itération étant exécutée pour l'image (B) dans le cas où la mesure de qualité déterminée se situe sous une limite qualitative prédéfinissable.

9. Utilisation du procédé selon l'une des revendications 1 à 8 pour retravailler des images.

10. Utilisation du procédé selon l'une des revendications 1 à 8 pour la prédiction de l'image (B) dans le cadre du codage de l'image et/ou du décodage de l'image.

11. Unité de codage d'image pour le codage d'images numérisées,

    - comprenant un premier moyen (DCT) pour le codage par transformation,
    - comprenant un deuxième moyen (Q) pour la quantification de coefficients de transformation qui ont été formés par le premier moyen (DCT) lors du codage par transformation,
    - comprenant un troisième moyen (IQ) pour la quantification inverse de coefficients de transformation quantifiés,
    - comprenant un quatrième moyen (IDCT) pour le codage par transformation inverse,
    - comprenant une mémoire d'images (FM) pour le stockage de données d'image,
    - comprenant un cinquième moyen (MC) pour la prédiction de données d'image de deux images consécutives dans le temps,
    - comprenant une unité de soustraction (SE) à laquelle sont amenées, d'une part, des données d'image d'une image à coder et, d'autre part, des données d'image d'une image antérieure dans le temps, de manière à ce que seules des données d'image différentielles de deux images consécutives soient amenées au premier moyen (DCT) et codées et
    - comprenant un sixième moyen (BV) pour l'élimination d'artefacts de codage, qui est configuré de manière à ce que le procédé selon l'une des revendications 1 à 8 soit exécuté dans le sixième moyen (BV).

12. Unité de codage d'image selon la revendication 11, comprenant un septième moyen (SEG) pour la segmentation de l'image en blocs d'image (BB) et/ou objets d' image (BO).

**13.** Unité de codage d'image pour le codage d'images numérisées,

- comprenant un troisième moyen (IQ) pour la quantification inverse de coefficients de transformation quantifiés,
- comprenant un quatrième moyen (IDCT) pour le codage par transformation inverse,
- comprenant une mémoire d'images (FM) pour le stockage de données d'image,
- comprenant un cinquième moyen (MC) pour la prédiction de données d'image de deux images consécutives dans le temps,
- comprenant une unité d'addition (AE) à laquelle sont amenés, d'une part, les coefficients de transformation quantifiés d'une image à décoder et, d'autre part, des données d'image d'une image décodée antérieure dans le temps, de manière à ce que des données d'image prédites de deux images consécutives soient amenées au troisième moyen (IQ) et décodées et
- comprenant un sixième moyen (BV) pour l'élimination d'artefacts de codage, qui est configuré de manière à ce que le procédé selon l'une des revendications 1 à 8 soit exécuté dans le sixième moyen (BV).

## FIG 1

B

# FIG 2

**FIG 3**

**FIG 4**

**FIG 7**

**FIG 5**

## FIG 6

**501**
Ähnlichkeit der Helligkeitswerte eines Nachbarbildpunkts und des Bildpunkts > Schranke?

**601**
Bildpunkt und Nachbarbildpunkt befinden sich in verschiedenen Objektblöcken?

Ja

Nein

Ja

**505**
Helligkeitswert des Nachbarbildpunkts wird bei Ermittlung eines neuen Helligkeitswerts eines Bildpunkts nicht berücksichtigt

Nein

**502**
Helligkeitswert des Nachbarbildpunkts wird bei Ermittlung eines neuen Helligkeitswerts eines Bildpunkts berücksichtigt

**504**
Neuer Helligkeitswerts des Bildpunkts ergibt sich mindestens aus Mittelung über berücksichtigte Nachbarbildpunkte

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5337088 A, HONJO MASAHIRO
- US 5229864 A, MORONAGA KENJI

**In der Beschreibung aufgeführte Nicht-Patentliteratur**

- **G. WALLACE.** The JPEG Still Picture Compression Standard. *Communications of the ACM,* April 1991, vol. 34 (4), 31-44
- **D. LE GALL.** The Video Compression Standard for Multimedia Applications. *Communications of the ACM,* April 1991, vol. 34 (4), 47-58
- **MING LIOU.** Overview of the px64 kbit/s Video Coding Standard. *Communications of the ACM,* April 1991, vol. 34 (4), 60-63
- **H. G. MUSMANN et al.** Object-Oriented Analysis-Synthesis Coding of Moving Images. *Signal Processing: Image Communication,* Oktober 1989, vol. 1 (2), 117-138
- **MPEG-4.** Video Verification Model Version 2.0. *ISO/IEC JTC 1/ SC 29,* Marz 1996, vol. WG 11 (1260), 9-32
- **T. ÖZCELIK et al.** Image and Video Compression Algorithms Based on Recovery Techniques Using Mean Field Annealing. *Proceedings of the IEEE,* 1995, vol. 83 (2), 304-316
- **G. BJONTEGAARD.** A Simple at Loop Filter to Reduce Blocking and Moscito Noise. *ISO/IEC, 1/SC29/WG11 Dokument Nr. MPEG 96/0617,* Januar 1996
- **T. P. O'ROURKE et al.** Improved Image Decompression for Reduced Transform Coding Artifacts. *IEEE Transactions on Circuits and Systems for Video Technology,* 1995, vol. 5, 490-499
- **Y. YANG et al.** Regularized Reconstruction to Reduce Blocking Artifacts of Block Discrete Cosine Transform Compressed Images. *IEEE Transactions on Circuits and Systems for Video Technology,* 1993, 421-432
- **A. BLAKE ; A. ZISSERMAN.** Visual Reconstruction. MIT-Press, 1987, 111-125